# EUROPÄISCHE PATENTANMELDUNG

(11) **EP 3 777 499 A1**
(43) Veröffentlichungstag der Anmeldung: **17.02.2021**
(21) Anmeldenummer: 20169747.1
(22) Anmeldetag: 16.04.2020
(51) Int. Cl.: A01B 76/00, A01B 69/04

(54) **LANDWIRTSCHAFTLICHE ZUGMASCHINE**

(30) Priorität: 16.08.2019 DE 102019122114
(71) Anmelder: CLAAS Tractor S.A.S., 78141 Vélizy-Villacoublay Cedex (FR)
(72) Erfinder: Ehlert, Christian, 33719 Bielefeld (DE); Wieckhorst, Jan Carsten, 33104 Paderborn (DE); Birkmann, Christian, 33775 Versmold (DE); Pieper, Jona, 59394 Nordkirchen (DE)
(74) Vertreter: CLAAS Gruppe

(57) **Zusammenfassung**

Die Erfindung betrifft eine landwirtschaftliche Zugmaschine, insbesondere Traktor, zur Nutzung bei der Abarbeitung eines landwirtschaftlichen Arbeitsprozesses, wobei die landwirtschaftliche Zugmaschine (1) mit Maschinenparametern einstellbare Arbeitsaggregate (2) aufweist, wobei die landwirtschaftliche Zugmaschine (1) zur Bearbeitung eines Feldes (3) mit einem Anbaugerät (4) koppelbar ist und wobei die landwirtschaftliche Zugmaschine (1) ein Steuerungs-und Regelungsmodul (5) aufweist, das die Arbeitsaggregate (2), durch Ermittlung von Maschinenparametern für die Arbeitsaggregate (2), unter Verwendung von Optimierungsdaten hinsichtlich mindestens einer Zielvorgabe optimiert. Es wird vorgeschlagen, dass das Steuerungs- und Regelungsmodul (5) eine mehrstufige Optimierungsstrategie mit voneinander unterschiedlichen Stufen abarbeitet, dass die mehrstufige Optimierungsstrategie eine erste Stufe "auf dem Hof" umfasst, in der eine Zielvorgabe die Optimierung einer Grundkonfiguration der landwirtschaftlichen Zugmaschine (1) ist, dass die mehrstufige Optimierungsstrategie eine zweite Stufe "am Feld" umfasst, in der eine Zielvorgabe die Optimierung einer anbaugerätespezifischen Konfiguration der landwirtschaftlichen Zugmaschine (1) ist und dass die mehrstufige Optimierungsstrategie eine dritte Stufe "im Feld" umfasst, in der eine Zielvorgabe die Anpassung der Grundkonfiguration und der anbaugerätespezifischen Konfiguration während einer Bearbeitung des Feldes (3) ist.

## Beschreibung

Die Erfindung betrifft eine landwirtschaftliche Zugmaschine, insbesondere einen Traktor, zur Nutzung bei der Abarbeitung eines landwirtschaftlichen Arbeitsprozesses gemäß dem Oberbegriff von Anspruch 1.

Die in Rede stehende landwirtschaftliche Zugmaschine weist mit Maschinenparametern einstellbare bordeigene Arbeitsaggregate auf und ist zur Bearbeitung eines Feldes abhängig vom landwirtschaftlichen Arbeitsprozess mit einem Anbaugerät koppelbar. Dabei kann ein und dieselbe Zugmaschine mit den unterschiedlichsten Anbaugeräten kombiniert werden. Bei solchen Anbaugeräten handelt es sich beispielsweise um Mähwerke, Ballenpressen, Schwader, Wender, Bodenbearbeitungsgeräte, Düngerstreuer oder dergleichen. Die Anbaugeräte können zum Teil vorne und zum Teil hinten an die Zugmaschine angebaut werden.

Aus der EP 3 243 367 A2 und der EP 3 243 368 A2 sind jeweils als Traktor ausgestaltete Zugmaschinen bekannt, die ganz allgemein mit einem Anbaugerät oder speziell mit einem Bodenbearbeitungsgerät gekoppelt ein Gespann bilden, wobei sowohl die Zugmaschine als auch das Anbaugerät sich jeweils selbst optimieren und dabei auch Einfluss auf den jeweils anderen Partner des Gespanns nehmen.

Mit den bekannten Zugmaschinen wurde ein erster Schritt in Richtung einer effizienten Optimierung einer Zugmaschine genommen. Diese Optimierung ist jedoch lediglich bei der Bearbeitung eines Feldes bei bereits bestehender Kombination aus landwirtschaftlicher Zugmaschine und Anbaugerät effizient. Hinsichtlich der Optimierung der Zugmaschine bei unterschiedlichen Fortschritten des landwirtschaftlichen Arbeitsprozesses, bei denen sie noch nicht mit dem Anbaugerät gekoppelt ist, besteht noch Potential.

Der Erfindung liegt das Problem zu Grunde, die bekannte landwirtschaftliche Zugmaschine derart auszugestalten und weiterzubilden, dass die Optimierung bei unterschiedlichen Fortschritten des landwirtschaftlichen Arbeitsprozesses effizienter wird.

Das obige Problem wird bei einer landwirtschaftlichen Zugmaschine gemäß dem Oberbegriff von Anspruch 1 durch die Merkmale des kennzeichnenden Teils von Anspruch 1 gelöst.

Zunächst einmal wird davon ausgegangen, dass die landwirtschaftliche Zugmaschine ein Steuerungs- und Regelungsmodul aufweist, das die Arbeitsaggregate, durch Ermittlung von Maschinenparametern für die Arbeitsaggregate, unter Verwendung von Optimierungsdaten hinsichtlich mindestens einer Zielvorgabe optimiert.

Wesentlich ist nun, dass bei dieser Optimierung mehrere voneinander unterschiedliche Stufen abgearbeitet werden. Es wurde erkannt, dass eine mehrstufige Optimierungsstrategie mit unterschiedlichen Zielvorgaben in den einzelnen Stufen deutliches Potential bei der Gesamtoptimierung der landwirtschaftlichen Zugmaschine bietet. Dabei umfasst die Optimierungsstrategie zumindest die Stufen "auf dem Hof", "am Feld" und "im Feld". Die erste Stufe "auf dem Hof" betrifft die Optimierung der landwirtschaftlichen Zugmaschine dabei hinsichtlich ihrer Grundkonfiguration als Vorbereitung auf die beiden weiteren Stufen, die zweite Stufe "am Feld" betrifft die Optimierung der landwirtschaftlichen Zugmaschine dabei hinsichtlich einer anbaugerätespezifischen Konfiguration und die dritte Stufe "im Feld" betrifft die optimierte Anpassung der Grundkonfiguration und der anbaugerätespezifischen Konfiguration während einer Bearbeitung des Feldes.

Im Einzelnen wird vorgeschlagen, dass das Steuerungs- und Regelungsmodul eine mehrstufige Optimierungsstrategie mit voneinander unterschiedlichen Stufen abarbeitet, dass die mehrstufige Optimierungsstrategie eine erste Stufe "auf dem Hof" umfasst, in der eine Zielvorgabe die Optimierung einer Grundkonfiguration der landwirtschaftlichen Zugmaschine ist, dass die mehrstufige Optimierungsstrategie eine zweite Stufe "am Feld" umfasst, in der eine Zielvorgabe die Optimierung einer anbaugerätespezifischen Konfiguration der landwirtschaftlichen Zugmaschine ist und dass die mehrstufige Optimierungsstrategie zumindest eine dritte Stufe "im Feld" umfasst, in der eine Zielvorgabe die Anpassung der Grundkonfiguration und der anbaugerätespezifischen Konfiguration während einer Bearbeitung des Feldes ist.

Bei einer besonders bevorzugten Ausgestaltung gemäß Anspruch 2 unterscheiden sich die Stufen hinsichtlich eines Fortschritts des landwirtschaftlichen Arbeitsprozesses. Dadurch, dass die unterschiedlichen Zielvorgaben der jeweiligen Stufe einem Fortschritt des landwirtschaftlichen Arbeitsprozesses zugeordnet werden, kann mittels der landwirtschaftlichen Zugmaschine der landwirtschaftliche Arbeitsprozess optimiert werden.

Wenn die Stufen, wie in der Ausgestaltung gemäß Anspruch 3 gefordert, einem Positionsgebiet relativ zu dem Feld zugeordnet sind, kann auch dies effizienzsteigernd in die Zielvorgaben einfließen. Die Positionsgebiete sind dabei allerdings nicht als eng begrenzte, geographisch vollständig unterschiedliche Gebiete zu sehen. Vielmehr ist es vorzugsweise so, dass den jeweiligen Stufen auch nur zum Teil unterschiedliche Positionsgebiete, die einander überlappen können, zugeordnet werden.

Bei den Ausgestaltungen der Ansprüche 4 bis 6 können sich die Optimierungsdaten, die Arbeitsaggregate oder die Maschinenparameter der jeweiligen Stufen in zumindest zwei, vorzugsweise den drei vorschlagsgemäßen, Stufen unterscheiden. So wird der Tatsache Rechnung getragen, dass sich die Stufen zumeist nicht nur hinsichtlich ihrer Zielvorgabe, sondern auch hinsichtlich der vorhandenen und notwendigen Optimierungsdaten, den dort sinnvoll einzustellenden Maschinenparametern und sogar den zu optimierenden Arbeitsaggregaten unterscheiden.

Die Ansprüche 7 und 8 geben bevorzugte Eigenschaften der Maschinenparameter in den verschiedenen Stufen an.

Anspruch 9 gibt Optimierungsdaten an, mittels derer die Grundkonfiguration als Zielvorgabe der Optimierung in der ersten Stufe besonders erfolgreich verbessert werden kann. Die entsprechend in der ersten Stufe vorzugsweise zu ermittelnden Maschinenparameter gibt Anspruch 10 an. Gleiches gilt für die Ansprüche 11 und 12 für die zweite Stufe und für die Ansprüche 13 und 14 für die dritte Stufe.

Anspruch 15 schließlich beschäftigt sich mit bevorzugten Ausgestaltungen der Optimierung der Arbeitsaggregate in der dritten Stufe.

Im Folgenden wird die Erfindung anhand einer lediglich ein Ausführungsbeispiel darstellenden Zeichnung näher erläutert. In der Zeichnung zeigt:
- Fig. 1: eine vorschlagsgemäße landwirtschaftliche Zugmaschine, hier als Traktor ausgestaltet, mit einem schematisch angedeuteten Anbaugerät und
- Fig. 2: schematisch die vorschlagsgemäßen Stufen "auf dem Hof", "am Feld" und "im Feld".

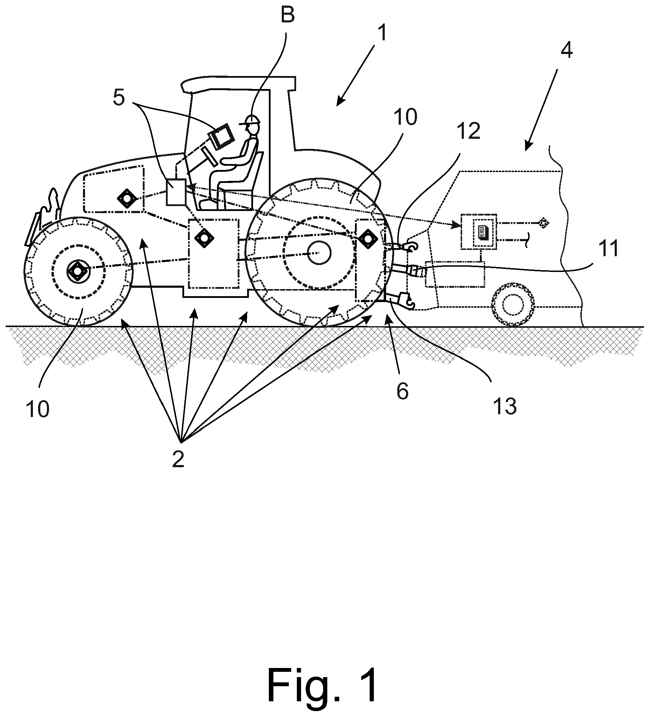

Fig. 1 zeigt eine vorschlagsgemäße, hier als Traktor ausgestaltete, landwirtschaftliche Zugmaschine 1. Diese landwirtschaftliche Zugmaschine 1 wird bei der Abarbeitung eines landwirtschaftlichen Arbeitsprozesses genutzt. Bei diesem landwirtschaftlichen Arbeitsprozess kann es sich beispielsweise um eine Ernte inklusive Anfahrt und Abfahrt des geernteten Kornes handeln. Die landwirtschaftliche Zugmaschine 1 weist mit Maschinenparametern einstellbare Arbeitsaggregate 2 auf. Bei den Maschinenparametern kann es sich um eine Vielzahl an einstellbaren Parametern handeln, die im Folgenden noch thematisiert werden. Beispielhaft seien hier schon eine Ballastierung der landwirtschaftlichen Zugmaschine 1 und eine Drehzahl des Motors genannt.

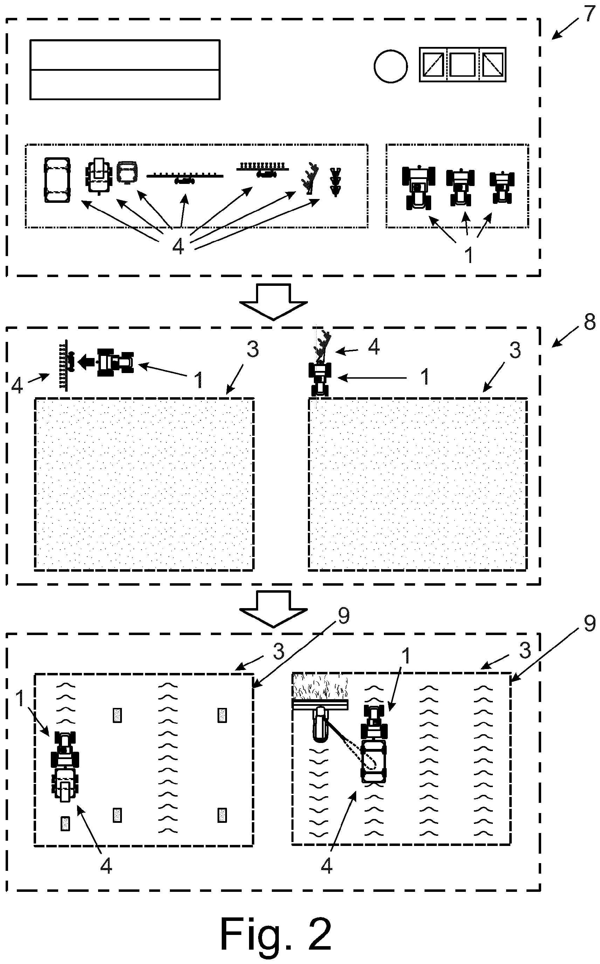

Die landwirtschaftliche Zugmaschine 1 ist zur Bearbeitung eines Feldes 3 mit einem Anbaugerät 4 koppelbar. Für Beispiele dieser Anbaugeräte 4 wird auf den einleitenden Teil der Beschreibung sowie Fig. 2 verwiesen. Der Begriff "koppelbar" bezieht sich hierbei auf eine mechanische und zumeist auch elektrische und/oder hydraulische Verbindung zwischen der landwirtschaftlichen Zugmaschine 1 und dem Anbaugerät 4.

Die landwirtschaftliche Zugmaschine 1 weist ein Steuerungs- und Regelungsmodul 5 auf, das die Arbeitsaggregate 2, durch Ermittlung von Maschinenparametern für die Arbeitsaggregate 2 unter Verwendung von Optimierungsdaten hinsichtlich mindestens einer Zielvorgabe optimiert. Vorzugsweise stellt das Steuerungs- und Regelungsmodul 5 zumindest einen Teil der Maschinenparameter an den Arbeitsaggregaten 2 selbstständig und automatisch ein. Einen anderen Teil der Maschinenparameter kann das Steuerungs- und Regelungsmodul 5 einem Benutzer B zur Einstellung vorgeben. So lässt sich beispielsweise eine Ballastierung nicht oder nur schwerlich automatisch einstellen.

Bei den Maschinenparametern der Arbeitsaggregate 2 kann es sich grundsätzlich um Maschinenparameter aller Abstraktionsebenen handeln. Es ist auch möglich, dass ein Maschinenparameter einer höheren Abstraktionsebene wiederum einen Einfluss auf einen anderen Maschinenparameter einer niedrigeren Abstraktionsebene hat. Der Begriff "Maschinenparameter" ist insofern weit auszulegen, wobei jedoch hervorzuheben ist, dass es sich bei den Maschinenparametern um direkte Einstellungen handelt, die für sich genommen eindeutig einstellbar sind. Eine Strategie wie beispielsweise "Diesel sparen" ist somit kein Maschinenparameter. Auch der Begriff "Arbeitsaggregate" ist weit auszulegen, da ein Arbeitsaggregat 2 auch Teil eines anderen Arbeitsaggregats 2 sein kann. Auch die Optimierung der Arbeitsaggregate 2 ist nicht alleinig als Optimierung des einzelnen Arbeitsaggregats 2 zu verstehen, sondern ist eine Optimierung im Gesamtkontext der landwirtschaftlichen Zugmaschine 1.

Während des Fortschritts der Abarbeitung des landwirtschaftlichen Arbeitsprozesses unterscheiden sich die Rahmenbedingungen des landwirtschaftlichen Arbeitsprozesses deutlich. Um die landwirtschaftliche Zugmaschine 1 bestmöglich an diese unterschiedlichen Rahmenbedingungen anzupassen, ist es vorschlagsgemäß so, dass das Steuerungs- und Regelungsmodul 5 eine mehrstufige Optimierungsstrategie mit voneinander unterschiedlichen Stufen abarbeitet. Diesen Stufen ist es inhärent, dass sie sich nicht nur bezüglich ihrer Rahmenbedingungen, sondern auch bezüglich ihrer Zielvorgaben, voneinander unterscheiden.

Die mehrstufige Optimierungsstrategie umfasst eine erste Stufe "auf dem Hof", in der eine Zielvorgabe die Optimierung einer Grundkonfiguration der landwirtschaftlichen Zugmaschine 1 ist. Der Begriff "Grundkonfiguration" wird im Folgenden noch weiter erläutert, als Beispiel sei hier jedoch schon die Art einer Bereifung genannt. Die Art der Bereifung einer landwirtschaftlichen Zugmaschine 1 kann nicht zu jedem Zeitpunkt beliebig verändert werden und muss daher schon zu Beginn der Abarbeitung des landwirtschaftlichen Arbeitsprozesses mit Bedacht gewählt werden.

Vorschlagsgemäß umfasst die mehrstufige Optimierungsstrategie auch eine zweite Stufe "am Feld", in der eine Zielvorgabe die Optimierung einer anbaugerätespezifischen Konfiguration der landwirtschaftlichen Zugmaschine 1 ist. Der Begriff "anbaugerätespezifisch" betrifft dabei jene Maschinenparameter, die einen Einfluss auf die Funktionsweise im weitesten Sinne des Anbaugeräts 4 haben, vorzugsweise jedoch jene, die auch in ihrer Funktion von dem Anbaugerät 4 beeinflusst werden. Während die genannte Wahl der Bereifung der Grundkonfiguration der landwirtschaftlichen Zugmaschine 1 zuzuordnen ist, weist die landwirtschaftliche Zugmaschine 1, insbesondere im Bereich einer Drei-Punkt-Mechanik eines modernen Traktors, diverse Arbeitsaggregate 2 mit ihren Maschinenparametern auf, die zwar zur landwirtschaftlichen Zugmaschine 1 gehören, deren Konfiguration jedoch anbaugerätespezifisch ist.

Vorschlagsgemäß umfasst die mehrstufige Optimierungsstrategie weiterhin eine dritte Stufe "im Feld", in der eine Zielvorgabe die Anpassung der Grundkonfiguration und der anbaugerätespezifischen Konfiguration während einer Bearbeitung des Feldes 3 ist. Bei dieser Stufe schließlich handelt es sich um die Stufe, die die eigentliche Bearbeitung des Feldes 3 betrifft, während die erste und zweite Stufe der Vorbereitung der dritten Stufe dienen. Entsprechend werden die erste Stufe und die zweite Stufe und die dritte Stufe vorzugsweise in dieser Reihenfolge nacheinander durchlaufen. Auch denkbar ist, dass auf die erste Stufe mehrere Durchläufe der zweiten und der dritten Stufe folgen, wenn beispielsweise das Anbaugerät 4 nach einem Durchlauf der zweiten und dritten Stufe gewechselt wird. Dabei können neben den vorschlagsgemäßen Stufen auch Zwischenstufen, vorgelagerte und nachgelagerte Stufen vorgesehen sein.

Fig. 2 zeigt schematisch die vorschlagsgemäßen drei Stufen innerhalb der jeweiligen äußeren gestrichelten Rahmen.

Es ist hier und vorzugsweise so, dass sich die Stufen hinsichtlich eines Fortschritts des landwirtschaftlichen Arbeitsprozesses unterscheiden. Der Begriff "Fortschritt" bezieht sich dabei auf unterschiedliche Arbeiten der landwirtschaftlichen Zugmaschine 1 während des landwirtschaftlichen Arbeitsprozesses. Dann ist vorzugsweise die erste Stufe einem Beginn der Abarbeitung des landwirtschaftlichen Arbeitsprozesses zugeordnet und die landwirtschaftliche Zugmaschine 1 in der ersten Stufe noch nicht mit dem Anbaugerät 4 gekoppelt.

Zusätzlich oder alternativ ist die zweite Stufe vorzugsweise der Kopplung der landwirtschaftlichen Zugmaschine 1 mit dem Anbaugerät 4 zugeordnet. Wieder zusätzlich oder alternativ ist die dritte Stufe vorzugsweise der Verwendung des Anbaugeräts 4 im Feld 3 zugeordnet.

Hier und vorzugsweise sind die Stufen jeweils einem Positionsgebiet 7 - 9 relativ zu dem Feld 3 zugeordnet. Es ist dann vorzugsweise so, dass die erste Stufe einem Positionsgebiet 7 fern des Feldes, vorzugsweise an einem Hof, zugeordnet ist. Zusätzlich oder alternativ ist die zweite Stufe vorzugsweise einem Positionsgebiet 8 am Feld zugeordnet. Wieder zusätzlich oder alternativ kann die dritte Stufe einem Positionsgebiet 9 im Feld zugeordnet sein.

In der bevorzugten Ausführungsform betrifft die erste Stufe die Optimierung der Grundkonfiguration, insbesondere am Hof, zu Beginn der Abarbeitung des landwirtschaftlichen Arbeitsprozesses. So kann der Benutzer B noch vor dem Losfahren mit der landwirtschaftlichen Zugmaschine 1 diverse Maschinenparameter einstellen. Das Steuerungs- und Regelungsmodul 5 kann weitere Maschinenparameter auf eine bevorstehende Straßenfahrt und die Tagesplanung abstimmen. Sodann fährt der Benutzer B vorzugsweise zum Feld 3. Hierbei kann die landwirtschaftliche Zugmaschine 1 bereits mit dem Anbaugerät 4, jedoch insbesondere dieses nur schleppend, gekoppelt sein. Genauso vorteilhaft kann das Anbaugerät 4 jedoch am Feld bereitstehen.

Die zweite Stufe betrifft vorzugsweise eine Einstellung von Maschinenparametern am Anbaugerät 4 oder eine Kopplung mit dem Anbaugerät 4 und eine Einstellung von Maschinenparametern am Anbaugerät 4 oder die Einstellung der anbaugerätespezifischen Maschinenparameter der landwirtschaftlichen Zugmaschine 1 direkt am Feld 3. Hierbei können anbaugerätespezifische Maschinenparameter, aber auch zugmaschinenspezifische Maschinenparameter eingestellt werden. So können in der zweiten Stufe diejenigen Maschinenparameter verstellt werden, die vorher auf eine Straßenfahrt abgestimmt waren. Vorzugsweise fährt der Benutzer mit der landwirtschaftlichen Zugmaschine 1 nach Abschluss der Optimierungen der zweiten Stufe in das Feld 3 ein und beginnt mit dessen Bearbeitung.

Wie anhand des erläuterten Beispiels klar wird, ist es vorzugsweise so, dass in zumindest zwei der Stufen, vorzugsweise in zumindest drei der Stufen, weiter vorzugsweise in der ersten und in der zweiten und in der dritten Stufe, jeweils zumindest zum Teil unterschiedliche Arten von Optimierungsdaten zur Optimierung der Arbeitsaggregate 2 verwendet werden. Während beispielsweise in der ersten Stufe eine Tagesplanung Relevanz hat, können in der zweiten Stufe spezifische Daten des Anbaugeräts 4 verwendet werden, die sich auf dessen einmalige Einstellung beziehen, und in der dritten Stufe können dann Live-Sensordaten der landwirtschaftlichen Zugmaschine 1 und/oder des Anbaugeräts 4 als Optimierungsdaten verwendet werden.

Die Optimierungsdaten können dabei aus verschiedenen Quellen stammen, insbesondere von der landwirtschaftlichen Zugmaschine 1 selbst, vorzugsweise von Sensoren der landwirtschaftlichen Zugmaschine 1, und/oder von einer externen Datenquelle wie einem Hofrechner oder Cloud-Server und/oder von dem Anbaugerät 4, vorzugsweise von Sensoren des Anbaugeräts 4. Die von dem Anbaugerät 4 stammenden Optimierungsdaten können vorzugsweise über eine direkte Kommunikationsverbindung zwischen der landwirtschaftlichen Zugmaschine 1 und dem Anbaugerät 4 übertragen werden. Vorzugsweise werden in der ersten Stufe keine aus einer direkten Kommunikation zwischen der landwirtschaftlichen Zugmaschine 1 stammenden Optimierungsdaten verwendet. In der zweiten Stufe können schon aus einer direkten Kommunikation zwischen der landwirtschaftlichen Zugmaschine 1 und dem Anbaugerät 4 stammende Optimierungsdaten verwendet werden und in der dritten Stufe werden sie vorzugsweise verwendet.

Hier und vorzugsweise werden in zumindest zwei der Stufen, vorzugsweise in zumindest drei der Stufen, weiter vorzugsweise in der ersten und der zweiten und der dritten Stufe, jeweils zumindest zum Teil verschiedene der Arbeitsaggregate 2 optimiert. Zusätzlich oder alternativ werden in zumindest zwei der Stufen, vorzugsweise in zumindest drei der Stufen, weiter vorzugsweise in der ersten und der zweiten und der dritten Stufe, jeweils zumindest zum Teil verschiedene der Maschinenparameter ermittelt. Auch die Vorteile dieser Ausführungsformen ergeben sich aus dem oben erläuterten Beispiel und den inhärenten Unterschieden der verschiedenen Stufen.

Vorzugsweise werden in der ersten Stufe zumindest zum Teil Maschinenparameter ermittelt, die unabhängig von dem Anbaugerät 4 einstellbar sind. Dies ergibt sich schon daraus, dass in der ersten Stufe vorzugsweise das Anbaugerät 4 noch nicht mit der landwirtschaftlichen Zugmaschine 1 gekoppelt ist. In der zweiten Stufe werden vorzugsweise zumindest zum Teil Maschinenparameter ermittelt, die nur bei angekoppeltem Anbaugerät 4 einstellbar sind. Hier sei beispielsweise die Kinematik eines Heckhubwerks der landwirtschaftlichen Arbeitsmaschine 1 genannt. Dabei ist es zwar nicht zwingend so, dass dieses unmöglicherweise ohne Anbaugerät 4 eingestellt werden kann, jedoch ergibt die Einstellung normalerweise erst nach der Kopplung Sinn. In der dritten Stufe werden vorzugsweise zumindest zum Teil Maschinenparameter ermittelt, die sich während der Bearbeitung des Feldes 3 ändern.

Wie oben bereits angedeutet, werden vorzugsweise in der ersten Stufe und/oder in der zweiten Stufe und/oder in der dritten Stufe zumindest einige der Maschinenparameter automatisch von dem Steuerungs- und Regelungsmodul 5 eingestellt. Es kann vorgesehen sein, dass insbesondere in der ersten Stufe und/oder in der zweiten Stufe nicht alle der Maschinenparameter automatisch eingestellt werden. Vorzugsweise werden jedoch in der dritten Stufe, zumindest zeitweise, alle Maschinenparameter automatisch eingestellt. Dadurch muss der Benutzer B die Bearbeitung des Feldes 3 nicht unterbrechen.

Es kann vorgesehen sein, dass in der ersten Stufe Maschinenparameter ermittelt werden, die zumindest zum Teil während der zweiten und während der dritten Stufe konstant sind. Ebenso vorteilhaft können alternativ oder zusätzlich in der zweiten Stufe Maschinenparameter ermittelt werden, die zumindest teilweise während der dritten Stufe konstant sind. Dabei ist es theoretisch sogar denkbar, dass während der ersten Stufe und der zweiten Stufe jeweils nur Maschinenparameter ermittelt werden, die während der dritten Stufe konstant sind. In diesem Fall würden während der dritten Stufe jedoch trotzdem diverse Anpassungen anderer Maschinenparameter der Grundkonfiguration und der anbaugerätespezifischen Konfiguration ermittelt und vorzugsweise automatisch eingestellt. Üblicherweise werden sich die während der Stufen ermittelten Maschinenparameter jedoch teilweise überschneiden.

Es kann vorgesehen sein, dass in der dritten Stufe Maschinenparameter zumindest zum Teil auf Basis von von dem Anbaugerät 4 empfangenen Daten ermittelt werden. Bei diesen Daten kann es sich zum Beispiel um Sensordaten des Anbaugeräts 4 handeln.

Im Folgenden werden die bevorzugten Ausführungsformen der Optimierungsdaten der Maschinenparameter genannt.

Hier und vorzugsweise umfassen die Optimierungsdaten der ersten Stufe Daten zu einer Ballastierung der landwirtschaftlichen Zugmaschine 1 und/oder zu einem Nutzerprofil und/oder zu einer Bereifung der landwirtschaftlichen Zugmaschine 1 und/oder zu einem Reifendruck der Bereifung der landwirtschaftlichen Zugmaschine 1 und/oder zu Felddaten und/oder zu, insbesondere prognostizierten, Wetterdaten und/oder zu für den landwirtschaftlichen Arbeitsprozess an der landwirtschaftlichen Zugmaschine 1 montierbaren Zusatzgeräten. Bei der Bereifung handelt es sich insbesondere um Art und Größe der Reifen 10. Das Nutzerprofil kann diverse favorisierte Einstellungen von Maschinenparametern und/oder des Steuerungs- und Regelungsmoduls 5 umfassen. Die Felddaten können insbesondere Daten zur Trockenheit, zu einer angebauten Fruchtart und/oder einer Bodenart und/oder einem Bodenzustand umfassen. Die prognostizierten Wetterdaten können zum Beispiel Informationen dazu enthalten, ob ein starker Regen zu erwarten ist. Entsprechend könnte die Bereifung an einen voraussichtlich feuchter werdenden Boden angepasst werden. Bei den montierbaren Zusatzgeräten kann es sich zum Beispiel um eine Kamera zur Wilderkennung handeln, die vor allem bei der Ernte vorteilhaft ist.

Analog dazu umfassen die in der ersten Stufe ermittelten Maschinenparameter vorzugsweise Ballastierungsgewichte und/oder eine Reifenart und/oder Reifendrücke und/oder eine Spurweite, insbesondere eine einstellbare Spurweite der Hinterachse. Wie bereits angedeutet kann vorgesehen sein, dass ein Teil der Maschinenparameter der ersten Stufe manuell eingestellt wird. Dies kann insbesondere durch einen Montagevorgang geschehen. Alternativ oder zusätzlich können in der ersten Stufe Arbeitsaggregate 2 kalibriert werden. Bei der manuellen Einstellung ist vorgesehen, dass das Steuerungs- und Regelungsmodul 5 die entsprechenden Maschinenparameter dem Benutzer B vorschlägt.

Hier und vorzugsweise ist vorgesehen, dass die Optimierungsdaten der zweiten Stufe Daten zu einer Geräteanbindung, insbesondere einer Drei-Punkt-Mechanik 6, der landwirtschaftlichen Zugmaschine 1 und/oder zu einer Art des Anbaugeräts 4 und/oder, insbesondere aktuelle, Wetterdaten umfassen. Zusätzlich zur Art des Anbaugeräts 4 können die Optimierungsdaten der zweiten Stufe insbesondere auch ganz spezifische Identifikationsdaten des Anbaugeräts 4 umfassen. So kann vorgesehen sein, dass die Optimierungsdaten der ersten Stufe ganz allgemein die Art des Anbaugeräts 4 umfassen, beispielsweise die Art "Pflug", woraufhin die Ballastierung der landwirtschaftlichen Zugmaschine 1 noch am Hof entsprechend eingestellt werden kann. Die spezifische Art des Pfluges und dessen Eigenschaften können dann jedoch der zweiten Stufe zugeordnet sein, wenn der Pflug mit der landwirtschaftlichen Zugmaschine 1 gekoppelt wird.

Es kann vorgesehen sein, dass die in der zweiten Stufe ermittelten Maschinenparameter eine Fahrwerkshöhe und/oder eine Drehzahl einer Zapfwelle 1 und/oder eine Einstellung eines Oberlenkers 12 und/oder eines Unterlenkers 13 umfassen. Gerade diese Maschinenparameter können häufig nicht, beziehungsweise nicht sinnvoll, vor der Kopplung zwischen der landwirtschaftlichen Zugmaschine 1 und dem Anbaugerät 4 eingestellt werden.

Hier und vorzugsweise umfassen die Optimierungsdaten der dritten Stufe von dem Anbaugerät 4 empfangene Optimierungsdaten zu einer Fahrgeschwindigkeit und/oder zu einem Öldruck und/oder zu einer Ölmenge und/oder zu einer Fahrrichtung und/oder zu einem Auflagedruck und/oder zu einer Arbeitstiefe und/oder zu einer Drehzahl der Zapfwelle 11 und/oder Motor-Getriebe-Parameter, insbesondere eine Motordrückung. Die Ölmenge bezieht sich hierbei auf die Hydraulik der landwirtschaftlichen Zugmaschine 1, die über die Kopplung an das Anbaugerät 4 weitergegeben wird. Je nach Komplexität des Anbaugeräts 4 kann es sein, dass dieses deutlich bessere Daten beispielsweise zu einer optimalen oder einer maximalen Fahrgeschwindigkeit liefern kann.

Wiederum analog dazu umfassen die in der dritten Stufe ermittelten Maschinenparameter vorzugsweise eine Fahrgeschwindigkeit und/oder eine Ölmenge und/oder eine Fahrrichtung und/oder eine Drehzahl der Zapfwelle 11 und/oder Motor-Getriebe-Parameter, insbesondere eine Motordrückung. Bei den in der dritten Stufe ermittelten Maschinenparametern handelt es sich vorzugsweise um Maschinenparameter, die während der Bearbeitung des Feldes 3 regelmäßig angepasst werden müssen. Diese Anpassung kann kontinuierlich und/oder nach einem bestimmten Rhythmus und/oder nach Anforderung geschehen.

Hier und vorzugsweise optimiert in der dritten Stufe das Steuerungs- und Regelungsmodul 5 die Arbeitsaggregate 2 auf Basis der Optimierungsdaten hinsichtlich der Zielvorgabe auf Basis eines Kennfeldreglers und/oder auf Basis einer Strategievorwahl und/oder auf Basis fester Regeln. Ein Kennfeldregler kann beispielsweise ein Kennfeld enthalten, das aufzeigt, welche Drehzahl der Zapfwelle 11 bei welcher Ölmenge unter bestimmten Feldbedingungen optimal ist. Die Strategievorwahl kann zum Beispiel die Strategien "Effizienz", "Leistung", "Arbeitsqualität" und "Komfort" umfassen, die jeweils etwas andere Anforderungen zum Beispiel an das Fahrwerk und eine Federung enthalten. Eine feste Regel kann zum Beispiel ein maximaler Ölstrom für ein bestimmtes Anbaugerät 4 sein.

Hier und vorzugsweise gibt in der dritten Stufe das Steuerungs- und Regelungsmodul 5 dem Anbaugerät 4 zumindest einen Maschinenparameter zur Einstellung vor. Zusätzlich oder alternativ überträgt das Steuerungs- und Regelungsmodul 5 dem Anbaugerät 4 vorzugsweise Daten einer Vorfelderkennung, beispielsweise die Tatsache, dass ein Wildtier im Feldbestand gesichtet wurde und alle Arbeitsaggregate 2 sofort gestoppt werden sollen.

Die Abarbeitung der vorschlagsgemäßen mehrstufigen Optimierungsstrategie im Rahmen des landwirtschaftlichen Arbeitsprozesses, unter Verwendung der vorschlagsgemäßen landwirtschaftlichen Zugmaschine 1 kann vorzugsweise von einem Benutzer mittels eines natürlichsprachigen Dialogs mit dem Steuerungs- und Regelungsmodul 5 erfolgen. So ist sichergestellt, dass der Benutzer B die notwendigen Informationen schnell erfassen und zur Verfügung stellen kann.

### Bezugszeichenliste

- 1: Landwirtschaftliche Zugmaschine
- 2: Arbeitsaggregate
- 3: Feld
- 4: Anbaugerät
- 5: Steuerungs- und Regelungsmodul
- 6: Drei-Punkt-Mechanik
- 7: Positionsgebiet fern des Feldes
- 8: Positionsgebiet am Feld
- 9: Positionsgebiet im Feld
- 10: Reifen
- 11: Zapfwelle
- 12: Oberlenker
- 13: Unterlenker
- B: Benutzer

## Patentansprüche

1. Landwirtschaftliche Zugmaschine, insbesondere Traktor, zur Nutzung bei der Abarbeitung eines landwirtschaftlichen Arbeitsprozesses, wobei die landwirtschaftliche Zugmaschine (1) mit Maschinenparametern einstellbare Arbeitsaggregate (2) aufweist, wobei die landwirtschaftliche Zugmaschine (1) zur Bearbeitung eines Feldes (3) mit einem Anbaugerät (4) koppelbar ist und wobei die landwirtschaftliche Zugmaschine (1) ein Steuerungs- und Regelungsmodul (5) aufweist, das die Arbeitsaggregate (2), durch Ermittlung von Maschinenparametern für die Arbeitsaggregate (2), unter Verwendung von Optimierungsdaten hinsichtlich mindestens einer Zielvorgabe optimiert,
**dadurch gekennzeichnet,**
**dass** das Steuerungs- und Regelungsmodul (5) eine mehrstufige Optimierungsstrategie mit voneinander unterschiedlichen Stufen abarbeitet,
**dass** die mehrstufige Optimierungsstrategie eine erste Stufe "auf dem Hof" umfasst, in der eine Zielvorgabe die Optimierung einer Grundkonfiguration der landwirtschaftlichen Zugmaschine (1) ist, dass die mehrstufige Optimierungsstrategie eine zweite Stufe "am Feld" umfasst, in der eine Zielvorgabe die Optimierung einer anbaugerätespezifischen Konfiguration der landwirtschaftlichen Zugmaschine (1) ist und dass die mehrstufige Optimierungsstrategie eine dritte Stufe "im Feld" umfasst, in der eine Zielvorgabe die Anpassung der Grundkonfiguration und der anbaugerätespezifischen Konfiguration während einer Bearbeitung des Feldes (3) ist.

2. Landwirtschaftliche Zugmaschine nach Anspruch 1, **dadurch gekennzeichnet, dass** sich die Stufen hinsichtlich eines Fortschritts des landwirtschaftlichen Arbeitsprozesses unterscheiden, vorzugsweise, dass die erste Stufe einem Beginn der Abarbeitung des landwirtschaftlichen Arbeitsprozesses zugeordnet ist und die landwirtschaftliche Zugmaschine (1) in der ersten Stufe noch nicht mit dem Anbaugerät (4) gekoppelt ist und/oder die zweite Stufe der Kopplung der landwirtschaftlichen Zugmaschine (1) mit dem Anbaugerät (4) zugeordnet ist und/oder die dritte Stufe der Verwendung des Anbaugeräts (4) im Feld (3) zugeordnet ist.

3. Landwirtschaftliche Zugmaschine nach Anspruch 1 oder 2, **dadurch gekennzeichnet, dass** die Stufen jeweils einem Positionsgebiet relativ zu dem Feld (3) zugeordnet sind, vorzugsweise, dass die erste Stufe einem Positionsgebiet (7) fern des Feldes, vorzugsweise an einem Hof, zugeordnet ist und/oder die zweite Stufe einem Positionsgebiet (8) am Feld zugeordnet ist und/oder die dritte Stufe einem Positionsgebiet (9) im Feld zugeordnet ist.

4. Landwirtschaftliche Zugmaschine nach einem der vorhergehenden Ansprüche, **dadurch gekennzeichnet, dass** in zumindest zwei der Stufen, vorzugsweise in zumindest drei der Stufen, weiter vorzugsweise in der ersten und der zweiten und der dritten Stufe, jeweils zumindest zum Teil unterschiedlicher Arten von Optimierungsdaten zur Optimierung der Arbeitsaggregate (2) verwendet werden.

5. Landwirtschaftliche Zugmaschine nach einem der vorhergehenden Ansprüche, **dadurch gekennzeichnet, dass** in zumindest zwei der Stufen, vorzugsweise in zumindest drei der Stufen, weiter vorzugsweise in der ersten und der zweiten und der dritten Stufe, jeweils zumindest zum Teil verschiedene der Arbeitsaggregate (2) optimiert werden.

6. Landwirtschaftliche Zugmaschine nach einem der vorhergehenden Ansprüche, **dadurch gekennzeichnet, dass** in zumindest zwei der Stufen, vorzugsweise in zumindest drei der Stufen, weiter vorzugsweise in der ersten und der zweiten und der dritten Stufe, jeweils zumindest zum Teil verschiedene der Maschinenparameter ermittelt werden.

7. Landwirtschaftliche Zugmaschine nach einem der vorhergehenden Ansprüche, **dadurch gekennzeichnet, dass** in der ersten Stufe zumindest zum Teil Maschinenparameter ermittelt werden, die unabhängig von dem Anbaugerät (4) einstellbar sind, und/oder, dass in der in der zweiten Stufe zumindest zum Teil Maschinenparameter ermittelt werden, die nur bei angekoppeltem Anbaugerät (4) einstellbar sind, und/oder, dass in der dritten Stufe zumindest zum Teil Maschinenparameter ermittelt werden, die sich während der Bearbeitung des Feldes (3) ändern.

8. Landwirtschaftliche Zugmaschine nach einem der vorhergehenden Ansprüche, **dadurch gekennzeichnet, dass** in der ersten Stufe Maschinenparameter ermittelt werden, die zumindest zum Teil während der zweiten und während der dritten Stufe konstant sind, und/oder, dass in der zweiten Stufe Maschinenparameter ermittelt werden, die zumindest teilweise während der dritten Stufe konstant sind, und/oder, dass in der dritten Stufe Maschinenparameter zumindest zum Teil auf Basis von von dem Anbaugerät (4) empfangenen Daten ermittelt werden.

9. Landwirtschaftliche Zugmaschine nach einem der vorhergehenden Ansprüche, **dadurch gekennzeichnet, dass** die Optimierungsdaten der ersten Stufe Daten zu einer Ballastierung der landwirtschaftlichen Zugmaschine (1) und/oder zu einem Nutzerprofil und/oder zu einer Bereifung der landwirtschaftlichen Zugmaschine (1) und/oder zu einem Reifendruck der Bereifung der landwirtschaftlichen Zugmaschine (1) und/oder zu Felddaten und/oder zu, insbesondere prognostizierten, Wetterdaten und/oder zu für den Arbeitsprozess montierbaren Zusatzgeräten umfassen.

10. Landwirtschaftliche Zugmaschine nach einem der vorhergehenden Ansprüche, **dadurch gekennzeichnet, dass** die in der ersten Stufe ermittelten Maschinenparameter Ballastierungsgewichte und/oder eine Reifenart und/oder Reifendrücke und/oder eine Spurweite umfassen, und/oder, dass ein Teil der Maschinenparameter der ersten Stufe manuell eingestellt wird, insbesondere durch einen Montagevorgang, und/oder, dass in der ersten Stufe Arbeitsaggregate (2) kalibriert werden.

11. Landwirtschaftliche Zugmaschine nach einem der vorhergehenden Ansprüche, **dadurch gekennzeichnet, dass** die Optimierungsdaten der zweiten Stufe Daten zu einer Geräteanbindung, insbesondere einer Drei-Punkt-Mechanik (6), der landwirtschaftlichen Zugmaschine (1) und/oder zu einer Art des Anbaugeräts (4) und/oder, insbesondere aktuelle, Wetterdaten umfassen.

12. Landwirtschaftliche Zugmaschine nach einem der vorhergehenden Ansprüche, **dadurch gekennzeichnet, dass** die in der zweiten Stufe ermittelten Maschinenparameter eine Fahrwerkshöhe und/oder eine Drehzahl einer Zapfwelle (11) und/oder eine Einstellung eines Oberlenkers (12) und/oder eines Unterlenkers (13) umfassen.

13. Landwirtschaftliche Zugmaschine nach einem der vorhergehenden Ansprüche, **dadurch gekennzeichnet, dass** die Optimierungsdaten der dritten Stufe von dem Anbaugerät (4) empfangene Optimierungsdaten zu einer Fahrgeschwindigkeit und/oder zu einem Öldruck und/oder zu einer Ölmenge und/oder zu einer Fahrrichtung und/oder zu einem Auflagedruck und/oder zu einer Arbeitstiefe und/oder zu einer Drehzahl der Zapfwelle (11) und/oder Motor-Getriebe-Parameter, insbesondere eine Motordrückung, umfassen.

14. Landwirtschaftliche Zugmaschine nach einem der vorhergehenden Ansprüche, **dadurch gekennzeichnet, dass** die in der dritten Stufe ermittelten Maschinenparameter eine Fahrgeschwindigkeit und/oder eine Ölmenge und/oder einer Fahrrichtung und/oder eine Drehzahl der Zapfwelle (11) und/oder Motor-Getriebe-Parameter, insbesondere eine Motordrückung, umfassen.

15. Landwirtschaftliche Zugmaschine nach einem der vorhergehenden Ansprüche, **dadurch gekennzeichnet, dass** in der dritten Stufe das Steuerungs- und Regelungsmodul (5) die Arbeitsaggregate (2) auf Basis der Optimierungsdaten hinsichtlich der Zielvorgabe auf Basis eines Kennfeldreglers und/oder auf Basis einer Strategievorwahl und/oder auf Basis fester Regeln optimiert, und/oder, dass in der dritten Stufe die Steuerungs- und Regelungsmodul (5) dem Anbaugerät (4) zumindest einen Maschinenparameter zur Einstellung vorgibt und/oder dem Anbaugerät (4) Daten einer Vorfelderkennung überträgt.
